# EUROPÄISCHE PATENTSCHRIFT

(11) **EP 3 807 030 B1**
(45) Veröffentlichungstag und Bekanntmachung des Hinweises auf die Patenterteilung: **21.06.2023**
(21) Anmeldenummer: 19752956.3
(22) Anmeldetag: 29.07.2019
(51) Int. Cl.: B22F 10/366, B33Y 50/02, B33Y 10/00, B22F 5/00, B22F 10/28, B22F 10/38, B22F 3/105, B22F 10/36

(54) **BESTRAHLUNGSVERFAHREN FÜR DIE ADDITIVE HERSTELLUNG MIT VORBESTIMMTER TRAJEKTORIE**
METHOD OF IRRADIATING FOR ADDITIVE PRODUCTION WITH PREDETERMINED TRAJECTORY
PROCÉDÉ D'IRRADIATION POUR LA FABRICATION ADDITIVE À TRAJECTOIRE PRÉDÉFINIE

(30) Priorität: 07.08.2018 EP 18187680
(43) Veröffentlichungstag der Anmeldung: 21.04.2021
(73) Patentinhaber: Siemens Energy Global GmbH & Co. KG, 81739 München (DE)
(72) Erfinder: GEISEN, Ole, 14057 Berlin (DE); FERGANI, Omar, 13347 Berlin (DE)
(86) Internationale Anmeldenummer: PCT/EP2019/070327
(87) Internationale Veröffentlichungsnummer: WO 2020/030461

(56) Entgegenhaltungen:
- DE-A1-102013 224 788
- M. HIRSCH ET AL: "Targeted rework strategies for powder bed additive manufacture", ADDITIVE MANUFACTURING, Bd. 19, 23. November 2017 (2017-11-23), Seiten 127-133, XP055539971, NL ISSN: 2214-8604, DOI: 10.1016/j.addma.2017.11.011
- Sheng Huang ET AL: "Title Laser re-scanning strategy in selective laser melting for part quality enhancement : a review", Proceedings of the 3rd International Conference on Progress in Additive Manufacturing (Pro-AM 2018), 17. Mai 2018 (2018-05-17), Seiten 413-419, XP055540188, DOI: 10.25341/D4GP4J Gefunden im Internet: URL:http://hdl.handle.net/10220/45859 [gefunden am 2019-01-10]

## Beschreibung

Die vorliegende Erfindung betrifft ein Bestrahlungsverfahren für die additive Herstellung eines Bauteils zum Heilen von Strukturdefekten einzelner additiv aufgebauter Schichten für die Struktur des Bauteils. Weiterhin wird ein entsprechendes additives Herstellungsverfahren angegeben.

Das Bauteil ist vorzugsweise für den Einsatz in einer Strömungsmaschine, vorzugsweise im Heißgaspfad einer Gasturbine vorgesehen. Das Bauteil besteht vorzugsweise aus einer Superlegierung, insbesondere einer nickel- oder kobaltbasierten Superlegierung. Die Legierung kann weiterhin ausscheidungs- oder dispersionsgehärtet sein.

Moderne Gasturbinen sind Gegenstand stetiger Verbesserung, um ihre Effizienz zu steigern. Dies führt allerdings unter anderem zu immer höheren Temperaturen im Heißgaspfad. Die metallischen Materialien für Laufschaufeln, insbesondere der ersten Stufen, werden hinsichtlich ihrer mechanischen und thermischen Festigkeit ständig verbessert. Eine weitere Möglichkeit, die Performance von heißgasbelasteten Teilen signifikant zu verbessern, ist die Verwendung neuer Designs oder Kühlgeometrieen bzw. -funktionalitäten, welche erlauben, die Komponente oder das Bauteil effizient aber zuverlässig zu kühlen und so die Materialbelastung im Betrieb zu reduzieren.

Die generative oder additive Fertigung wird aufgrund ihres für die Industrie disruptiven Potenzials zunehmend interessant auch für die Neukonzeptionierung und Serienherstellung der genannten Turbinenkomponenten, wie beispielsweise Turbinenschaufeln oder Brennerkomponenten, welche im Heißgaspfad eingesetzt werden.

Additive Herstellungsverfahren umfassen beispielsweise als Pulverbettverfahren das selektive Laserschmelzen (SLM) oder Lasersintern (SLS), oder das Elektronenstrahlschmelzen (EBM).

Ein Verfahren zum selektiven Laserschmelzen mit einer nachfolgenden Temperaturbehandlung ist beispielsweise bekannt aus EP 2 601 006 B1.

Additive Fertigungsverfahren (englisch: "additive manufacturing") haben sich insbesondere als besonders vorteilhaft für komplexe oder kompliziert oder filigran designte Bauteile, beispielsweise labyrinthartige Strukturen, Kühlstrukturen und/oder Leichtbau-Strukturen erwiesen. Insbesondere ist die additive Fertigung durch eine besonders kurze Kette von Prozessschritten vorteilhaft, da ein Herstellungs- oder Fertigungsschritt eines Bauteils fast ausschließlich auf Basis einer entsprechenden CAD-Datei und der Wahl entsprechender Fertigungsparameter erfolgen kann.

Trotz großer Freiheitsgrade im Design der herzustellenden Bauteile steht die additive Fertigung der Strukturqualität von konventionell gefertigten, beispielsweise durch Feinguss hergestellten, Komponenten nach. Dies ist insbesondere dem schweißtechnisch schwierigen Aufbauprozess und entsprechend hohen beteiligten Temperaturgradienten geschuldet, welche hohe mechanische Spannungen in dem Bauteil hervorrufen. Insbesondere müssen die Temperaturen, welche durch einen Laser oder Elektronenstrahl in ein, beispielsweise pulverförmiges, Ausgangsmaterial eingetragen werden, lokal den Schmelzpunkt des Ausgangsmaterials übertreffen. Entfernt von dem Schmelzbad weist das Bauteil bzw. das Pulverbett jedoch nicht annähernd diese Temperaturen auf, was das Bauteil ganz besonders anfällig für Heiß- oder Erstarrungsrisse macht.

Obwohl es zum Teil möglich ist, diese Risse, Spannungen, Hohl- oder Fehlstellen oder andere Strukturdefekte, wie Anbindungsfehler, Korn- oder Phasengrenzen, in den Herstellungsmaschinen über eine Prozessüberwachung zu detektieren, besteht die Schwierigkeit, die entsprechenden Defekte zuverlässig und vorzugsweise auch prozesseffizient zu reparieren oder auszuheilen. Eine spiralenförmige Bestrahlungsstrategie zum Heilen von Defekten wird in Hirsch et al., Targeted rework strategies for powder bed additive manufacture, Additive Manufacturing 19 (2018) 127-133, offenbart.

Gängige Prozessüberwachungssysteme nutzen zum Beispiel optische Kameras, Wärmebildkameras, CMOS-Sensoren, Fotodioden, Pyrometer oder Kombinationen aus mehreren Sensoren oder Systemen.

Bestimmte Defekte, wie zum Beispiel Bindefehler zwischen zwei Schichten, können durch ein erneutes Umschmelzen zwar repariert oder ausgeheilt werden. Insbesondere bei anfälligen Materialien kann diese zusätzliche Belichtung oder Bestrahlung jedoch zu erneuten oder sekundären Defekten führen, zum Beispiel am Rande eines entsprechenden Schmelzbades.

Es ist daher eine Aufgabe der vorliegenden Erfindung, Mittel anzugeben, welche ein Ausheilen von Strukturdefekten zweckmäßig und/oder effizient ermöglichen. Insbesondere werden Mittel für eine angepasste Bestrahlungs- oder Scanstrategie und Prozessführung angegeben, welche die Temperaturgradienten beispielsweise zwischen einer erneut aufgeschmolzenen Zone und festem Material reduzieren. Dazu werden Reparaturstrategien oder -algorithmen angegeben, welche beispielsweise in einer Steuerungssoftware einer additiven Herstellungsmaschine oder Anlage hinterlegt werden und vor dem Beschichten der nächsten Schicht eingesetzt werden können.

Diese Aufgabe wird durch den Gegenstand der unabhängigen Patentansprüche gelöst. Vorteilhafte Ausgestaltungen sind Gegenstand der abhängigen Patentansprüche.

Ein Aspekt der vorliegenden Erfindung betrifft ein Bestrahlungsverfahren für die additive, insbesondere pulverbettbasierte, Herstellung eines Bauteils zum "Heilen" oder Reparieren von Strukturdefekten oder Aufbaudefekten in einer, beispielsweise zuvor, additiv aufgebauten Struktur oder Schicht für das Bauteil. Das Bauteil betrifft insbesondere metallische und vorzugsweise Hochleistungskomponenten, welche im Heißgaspfad einer Gasturbine eingesetzt werden.

Das Verfahren umfasst weiterhin das Bereitstellen eines Laser- und/oder Elektronenstrahls, beispielsweise im Wege des Betriebs einer handelsüblichen additiven Herstellungsanlage zum selektiven Laserschmelzen, selektives Lasersintern oder Elektronenstrahlschmelzen.

Das Verfahren umfasst weiterhin das selektive, gezielte, vorbestimmte, gesteuerte und/oder simulierte Bestrahlen eines Defektbereichs einer additiv aufgebauten Schicht der Struktur mit dem Laser und/oder Elektronenstrahl gemäß einer vorbestimmten, insbesondere geschlossenen, Trajektorie, welche den Defektbereich definiert. Der Defektbereich enthält weiterhin einen Strukturdefekt, vorzugsweise einen in einer zuvor aufgebauten Schicht detektierten Strukturdefekt. Demgemäß kann sich der Defektbereich auf einen in Aufsicht auf die Schicht betrachteten Bereich beziehen.

Der Begriff "Trajektorie" bezeichnet eine Bahnkurve für die Bestrahlung eines Ausgangsmaterials oder Pulvers für die Struktur bzw. das Bauteil. Vorzugsweise definiert die Trajektorie, beispielsweise durch ihre (laterale) Ausdehnung in der entsprechenden Schicht eine äußere Abmessung des Defektbereichs.

Erfindungsgemäß ist die Trajektorie eine schleifenartige Trajektorie.

Der Begriff "schleifenartig" bedeutet, dass die Trajektorie in sich, vollständig oder abschnittsweise geschlossen ist und beispielsweise eine Mehrzahl von Bögen (siehe unten) umfassen kann.

Die erfindungsgemäße Bestrahlungstrajektorie bzw. -strategie und entsprechende Prozessführung während der additiven Herstellung bzw. zwischen dem Aufbau einzelner Schichten reduzieren vorteilhafterweise mechanische Spannungen und/oder Temperaturgradienten zwischen (erneut) aufgeschmolzenen Zonen und bereits verfestigtem Material der Struktur. Gleichzeitig wird eine vereinfachte und zuverlässige Prozessführung oder -steuerung ermöglicht.

Vorteilhafterweise ermöglicht gerade die vorbestimmte und vorzugsweise geschlossene oder schleifenartige Bestrahlung des Defektbereichs, also eines Bereichs, welcher in der Schicht den Defekt enthält, ein besonders zweckmäßiges thermisches Ausheilen oder Reparieren eines im Rahmen eines additiven Herstellungsverfahrens bereits zuvor aufgetretenen Strukturdefektes. Insbesondere kann durch ein wiederholtes und/oder angepasstes Scannen oder Abfahren der Trajektorie mit dem Laser- oder Elektronenstrahl ein Energieeintrag in den Defektbereich besonders genau kontrolliert werden. Weiterhin verhindert die vorbestimmte, vorzugsweise geschlossene, Trajektorie die Bildung neuer Defektzentren, welche beispielsweise Sekundärdefekte provozieren könnten. Abhängig von der Art der Schleife, beispielsweise der Größe und des Durchmessers entsprechender Bögen der Trajektorie kann der Energieeintrag, welcher beispielsweise zeitlich in ein Pulver oder Basismaterial eingebracht wird, maßgeschneidert werden.

In einer Ausgestaltung wird der Defektbereich derart gewählt, dass der Strukturdefekt in einem Mittelpunkt des Defektbereichs liegt. Der Mittelpunkt kann einen Massen- oder Flächenmittelpunkt bzw. geometrischen oder Flächenschwerpunkt des Defektbereichs in der Schicht bezeichnen. Diese Ausgestaltung vereinfacht insbesondere einen erhöhten Energieeintrag durch die Bestrahlung bzw. Trajektorie im Zentrum des Defektbereichs. Mit anderen Worten kann die Bestrahlung entsprechend dieser Ausgestaltung einfacher und zweckmäßiger erfolgen.

Erfindungsgemäß umfasst der Defektbereich eine Mehrzahl von Teilschleifen oder Schleifensegmenten, wobei jede Teilschleife insbesondere zwei oder mehr gegenüberliegende Bögen aufweist oder durch diese gebildet wird. Bei zwei gegenüberliegenden Bögen einer Teilschleife erscheint diese Teilschleife beispielsweise ähnlich einer "acht".

In einer Ausgestaltung werden einzelne Teilschleifen bzw. Bögen nacheinander in Umfangsrichtung des Defektbereichs bestrahlt. Die Umfangsrichtung bezieht sich vorzugsweise auf eine Aufsicht auf den Defektbereich in der Schicht und kann entweder entsprechend oder gegen den Uhrzeigersinn definiert sein. Diese Ausgestaltung ermöglicht insbesondere eine sukzessive oder segmentartige Bestrahlung des Defektbereichs in einer kontrollierten und gleichmäßigen Manier, welche insbesondere das Auftreten von Sekundärdefekten zweckmäßig verhindern kann.

In einer Ausgestaltung überlappen sich benachbarte Teilschleifen oder Bögen zumindest teilweise. Diese Ausgestaltung kann vorteilhaft sein, wenn an den Schnittpunkten der Teilschleifen oder Bögen ein lokal oder punktweise besonders erhöhter Energieeintrag für das Ausheilen eines detektierten Defektes gewünscht bzw. erforderlich ist. Dieses Erfordernis kann sich beispielsweise auf eine Simulation oder eine theoretische Prognose stützen.

In einer Ausgestaltung überlappen sich benachbarte Teilschleifen bzw. Bögen nicht oder abschnittsweise nicht. Diese Ausgestaltung kann vorteilhaft sein, wenn an den Schnittpunkten der Teilschleifen oder Bögen flächendeckend oder teilschleifendeckend entweder ein besonders hoher oder ein besonders niedriger Energieeintrag bzw. ein besonders hoher bzw. niedriger Grad des Umschmelzens für das Ausheilen eines detektieren Defektes gewünscht bzw. erforderlich ist.

Ein besonders hoher Energieeintrag bzw. Grad des Umschmelzens erfolgt insbesondere dann, wenn der Verlauf eines Bogens parallel und besonders nah an einem benachbarten Bogen verläuft. Dahingegen erfolgt ein niedrigerer Energieeintrag bzw. Grad des Umschmelzens dann, wenn der Verlauf eines Bogens beispielsweise von demjenigen eines benachbarten Bogens entfernt ist. Auch dieser Ausgestaltung kann für den komplizierten Vorgang des Ausheilens von Defekten in additiv aufgebauten Strukturen von Vorteil sein.

In einer Ausgestaltung sind die Teilschleifen bzw. Bögen tropfenförmig, kegelförmig oder elliptisch. Dies sind sämtlich vorteilhafte und/oder zweckmäßige Beispiele für eine "Defektreparatur", welche gleichzeitig eine einfache steuerungs- und regeltechnische Ausführung ermöglicht.

In einer Ausgestaltung geht jeder oder fast jeder Bogen von einem Mittelpunkt des Defektbereichs aus und verläuft - zur Bildung oder Definition der Teilschleife bzw. eines weiteren Bogens - am Ende wieder durch den genannten Mittelpunkt. Durch diese Ausgestaltung kann zweckmäßigerweise besonders einfach eine geschlossene Schleife für die Trajektorie und/oder ein erhöhter Grad des Schmelzens oder Umschmelzens im Mittelpunkt des Defektbereichs ermöglicht werden.

In einer Ausgestaltung ist der Defektbereich, vorzugsweise umfassend eine Mehrzahl von Teilschleifen oder Bögen (siehe oben), radialsymmetrisch. Diese Ausgestaltung ist besonders vorteilhaft bei punktförmigen Defekten, beispielsweise kurzen Rissen oder lokalen Anbindungsfehlern einer zuvor aufgebauten Schicht der Struktur.

Der Ausdruck "radialsymmetrisch" bezeichnet vorliegend vorzugsweise in Aufsicht auf eine Schicht betrachtet eine Invarianz gegenüber Rotationen, also Winkeln und Achsen durch den Mittelpunkt.

In einer Ausgestaltung ist der Defektbereich, umfassend eine Mehrzahl von Teilschleifen und Bögen (siehe oben), nicht radialsymmetrisch sondern beispielsweise (radial) asymmetrisch. Diese Ausgestaltung kann insbesondere bei Defekten, welche zuvor am Rand der Schicht oder Struktur detektiert worden oder lateral weit ausgedehnten Defekten, beispielsweise längeren Rissen oder Anbindungsfehlern von Vorteil sein.

In einer Ausgestaltung wird ein Strahlparameter, beispielsweise eine Strahlleistung, wie eine Laserleistung und/oder - leistungsdichte, oder eine Bestrahlungsgeschwindigkeit, während der Bestrahlung des Defektbereichs variiert. Durch diese Ausgestaltung wird ein weiterer Freiheitsgrad gegeben, über welchen die Ausheilung, beispielweise abhängig von der besonderen Art des detektierten Defektes, konfektioniert oder ausgestaltet werden kann.

Der Ausdruck "Strahlparameter" bedeutet vorliegend vorzugsweise einen Betrieb des Lasers bzw. des Elektronenstrahls unabhängig von der gewählten Geometrie oder Trajektorie.

In einer Ausgestaltung wird eine Strahlleistung pro Teilschleife bzw. Bogen in einem Kernbereich des Defektbereichs im Vergleich zu einem Rand des Defektbereichs erhöht. Diese Ausgestaltung ermöglicht insbesondere geometrie- oder trajektorienunabhängig die Ausbildung eines vergrößerten Energieeintrags in der Nähe des Mittelpunktes des Defektbereichs und vorzugsweise demgemäß im Zentrum des Defekts. Beispielsweise kann der Energieeintrag in dem Randbereich zweckmäßigerweise geringer gewählt werden, um keine Sekundärrisse in den Defektbereich oder in der Nähe des ursprünglichen Defekts hervorzurufen. Gleichzeitig ist jedoch ein Wärmeeintrag in den Rand des Defektbereichs nötig, um den ursprünglichen Defekt zuverlässig zu reparieren.

In einer Ausgestaltung werden Strahlparameter für die Bestrahlung derart gewählt, dass ein Basismaterial für das Bauteil ausschließlich in dem Kernbereich geschmolzen beziehungsweise umgeschmolzen wird.

In einer Ausgestaltung werden Strahlparameter für die Bestrahlung derart gewählt, dass ein Basismaterial für das Bauteil ausschließlich an dem Rand lediglich erwärmt wird, also nicht auf- oder umgeschmolzen wird.

Gemäß den vorherig beschriebenen beiden Ausgestaltungen kann - wie zuvor angedeutet - der Energieeintrag besonders zweckmäßig und/oder graduell eingestellt werden.

Ein weiterer Aspekt der vorliegenden Erfindung betrifft ein Verfahren zum additiven, insbesondere pulverbettbasierten, Herstellen eines Bauteils, wobei einzelne Schichten des Bauteils zum Heilen von Strukturdefekten gemäß dem beschriebenen Bestrahlungsverfahren bestrahlt werden.

Weitere Merkmale, Eigenschaften und Vorteile der vorliegenden Erfindung werden im Folgenden anhand von Ausführungsbeispielen unter Bezugnahme auf die beigefügten Figuren näher erläutert. Alle bisher und im Folgenden beschriebenen Merkmale sind dabei sowohl einzeln als auch in Kombination miteinander vorteilhaft. Es versteht sich, dass andere Ausführungsformen benutzt und strukturelle oder logische Änderungen vorgenommen werden können, ohne von dem Schutzumfang der vorliegenden Erfindung abzuweichen. Die folgende Beschreibung ist deshalb nicht in einschränkendem Sinne aufzufassen.

Der hier verwendete Ausdruck "bzw." und "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Weitere Einzelheiten der Erfindung werden nachfolgend anhand der Figuren beschrieben.
- Figur 1: zeigt eine schematische Aufsicht auf eine additiv aufgebaute Struktur.
- Figuren 2-4: zeigen jeweils eine schematische Schnittansicht einer additiv aufgebauten Struktur.
- Figur 5: deutet schematisch in einer Aufsicht eine erfindungsgemäße Bestrahlungstrajektorie für die additive Herstellung eines Bauteils an.
- Figur 6: deutet schematisch eine Bestrahlungstrajektorie gemäß Figur 5 sowie einen Strukturdefekt an.
- Figur 7: deutet schematisch eine sukzessive Bestrahlung einer additiv aufgebauten Struktur an.
- Figur 8: deutet schematisch Details einer Bestrahlung einer additiv aufgebauten Struktur an.
- Figur 9: zeigt ein Diagramm, welches schematisch den räumlichen Verlauf eines Energieeintrags gemäß der Bestrahlung aus Figur 8 andeutet.
- Figur 10: deutet schematisch in einer Aufsicht eine erfindungsgemäße Bestrahlungstrajektorie gemäß einer weiteren Ausgestaltung an.
- Figur 11: deutet schematisch in einer Schnittansicht Aspekte der Bestrahlung gemäß der Bestrahlungstrajektorie aus Figur 10 an.
- Figuren 12-16: deuten schematisch weitere Aspekte des erfindungsgemäßen Bestrahlungsverfahrens an.

In den Ausführungsbeispielen und Figuren können gleiche oder gleich wirkende Elemente jeweils mit den gleichen Bezugszeichen versehen sein. Die dargestellten Elemente und deren Grö-ßenverhältnisse untereinander sind grundsätzlich nicht als maßstabsgerecht anzusehen, vielmehr können einzelne Elemente, zur besseren Darstellbarkeit und/oder zum besseren Verständnis übertrieben dick oder groß dimensioniert dargestellt sein.

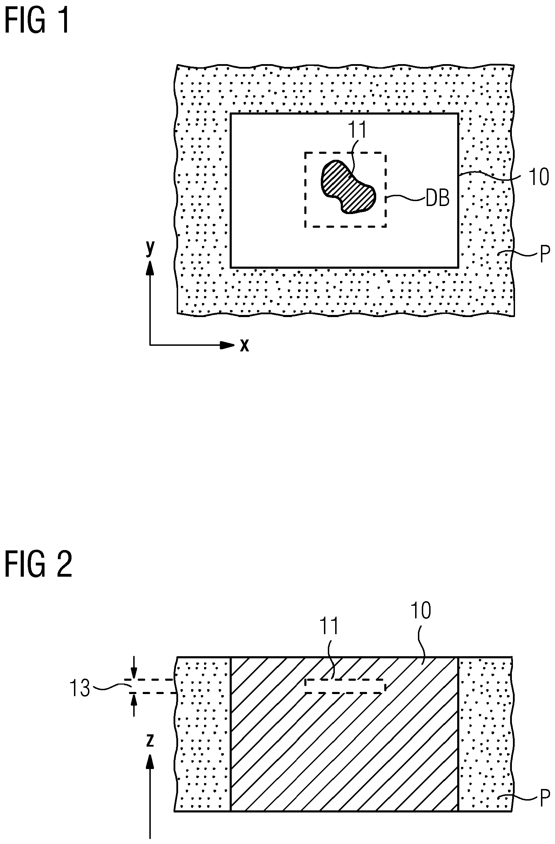

Figur 1 zeigt eine schematische Aufsicht auf eine additiv aufgebaute Struktur 10 für ein Bauteil. Bauteil und Struktur sind vorliegend der Einfachheit halber mit gleichen Bezugszeichen versehen, obwohl insbesondere auch strukturelle Unterschiede bestehen können, welche beispielsweise durch eine nachträgliche mechanische und/oder thermische Behandlung hervorgerufen werden.

Die Raumrichtungen gemäß derer sich die Struktur, beispielsweise eine oder mehrere additiv aufgebaute Schicht(en), (laterale) erstreckt sind vorliegend mit den Richtungen x und y gekennzeichnet.

Bei dem Bauteil 10 handelt es sich vorzugsweise um ein Bauteil, welches im Heißgaspfad einer Strömungsmaschine, beispielsweise einer Gasturbine eingesetzt wird. Insbesondere kann das Bauteil eine Lauf- oder Leitschaufel, ein Segment oder Ringsegment, ein Brennerteil oder eine Brennerspitze, eine Zarge, eine Schirmung, ein Hitzeschild, eine Düse, Dichtung, einen Filter, eine Mündung oder Lanze, einen Resonator, Stempel oder einen Wirbler bezeichnen, oder einen entsprechenden Übergang, Einsatz, oder ein entsprechendes Nachrüstteil.

Das Bauteil wird additiv und vorzugsweise aus einem Pulver bzw. Pulverbett P heraus aufgebaut, vorzugsweise durch selektives Lasersintern, selektives Laserschmelzen oder Elektronenstrahlschmelzen. Besonders bevorzugt wird das Bauteil durch selektives Laserschmelzen aufgebaut oder hergestellt. Im Rahmen des Verfahrens kann üblicherweise mittels gängiger Prozessüberwachung, beispielsweise über CMOS Sensoren, Fotodioden, Pyrometer oder Kombinationen dieser oder ähnlicher Verfahren, ein Strukturdefekt in einzelnen Schichten der Struktur erkannt oder detektiert werden. Ein solcher Strukturdefekt ist in Figur 1 mit dem Bezugszeichen 11 gekennzeichnet.

Weiterhin ist in Figur 1 ein Defektbereich DB eingezeichnet. Der Defektbereich DB wird gemäß dem beschriebenen Verfahren derart gewählt, dass er den Strukturdefekt 11 enthält. Demgemäß ist der Defektbereich DB vorzugsweise ein Aufsichtsbereich auf die entsprechende Schicht der Struktur 10. Der Defektbereich DB bezeichnet weiterhin einen Bereich, welcher für eine zweckmäßige Reparatur oder Ausheilung des Defekts 11 erneut wärmebehandelt, auf- oder umgeschmolzen werden sollte.

Die Figuren 2 bis 4 zeigen jeweils eine schematische Schnittansicht der Struktur 10, welche sich beispielsweise während ihres additiven Aufbaus befindet. Die Struktur 10 ist lediglich beispielhaft in Rechteckform dargestellt. Um die Struktur 10 herum ist ein Pulverbett, umfassend ein pulverförmiges Basismaterial oder Pulver P angeordnet, wie es pulverbett-basierten Verfahren inhärent ist.

Eine Aufbaurichtung des Bauteils 10 ist den Figuren 2 bis 4 mit der vertikalen z-Richtung gekennzeichnet.

Im oberen Teil der Struktur 10 ist der Strukturdefekt 11 anhand einer gestrichelten Kontur eingezeichnet. Es ist zu erkennen, dass der Strukturdefekt 11 sich beispielsweise über eine Schichtdicke (vergleiche Bezugszeichen 13) erstreckt. Der Strukturdefekt 11 kann sich aber ebenso gut über weniger als das Maß einer Schichtdicke oder über das Maß mehrerer Schichtdicken erstrecken.

In einer über dem Defekt 11 aufzubauenden Schicht bzw. bevor eine weitere Schicht Basismaterial P aufgetragen und diese verfestigt wird, sollte der Defekt jedoch ausgeheilt werden, um eine ausreichende Strukturqualität des Bauteils 10 zu gewährleisten. In Figur 2 ist zu erkennen, dass die Struktur 10 weiterhin mittels eines Laser- oder Elektronenstrahls 20 selektiv bestrahlt und verfestigt wird.

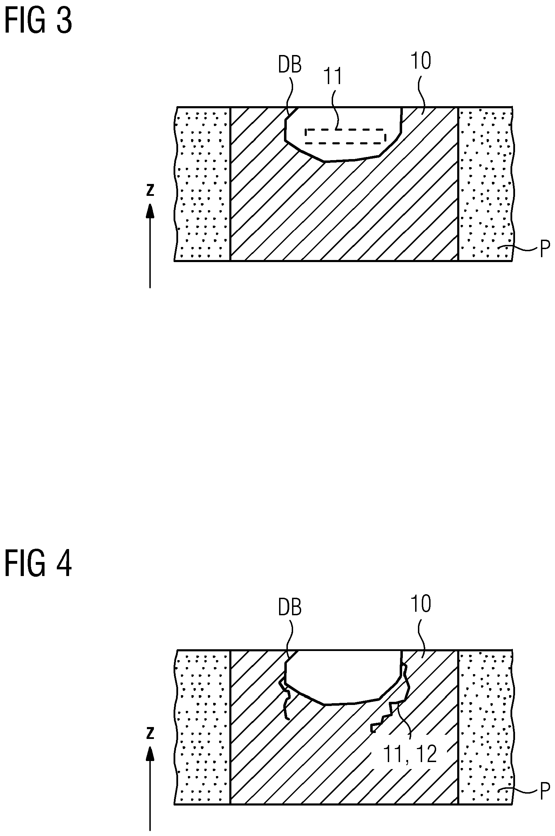

Figur 3 zeigt weiterhin einen Defektbereich DB, in welchem beispielsweise analog zur Figur 1 eine "Defektheilung" durchzuführen ist.

Figur 4 zeigt das Ergebnis einer fehlerhaften oder unzureichenden Reparatur oder Ausheilung des Defekts, bei der der Defektbereich, beispielsweise mittels des Laser- oder Energiestrahls 20 oder eines weiteren Energiestrahls, beispielsweise bestrahlt und "repariert" wurde. Anstatt, dass nun eine ausreichende Strukturqualität für das Bauteil 10 gewährleistet wurde, resultierten aus dem erneuten Umschmelzen in dem Defektbereich aufgrund einer falschen Bestrahlungsstrategie bzw. Wahl von Bestrahlung- und/oder Strahlparametern Folgedefekte oder Sekundärdefekte, wie die eingezeichneten Risse 12.

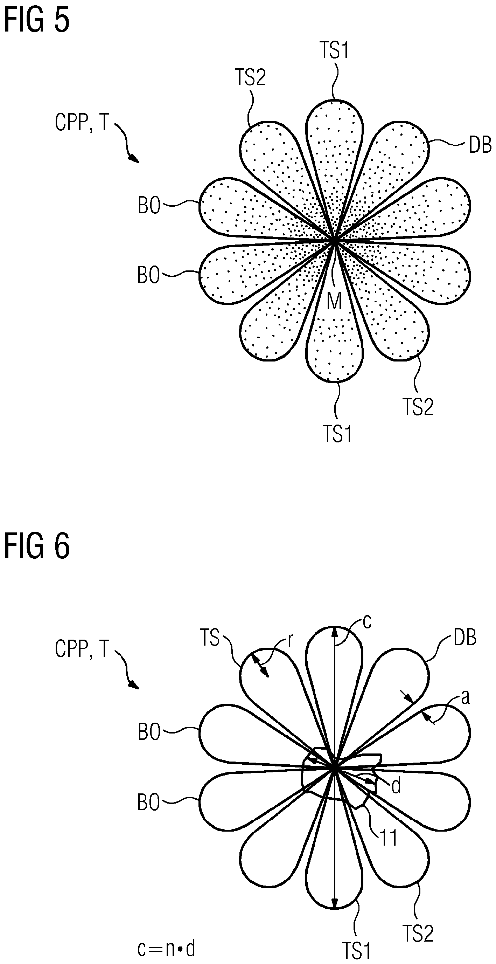

Figur 5 deutet nun und anhand einer schematischen Aufsicht, insbesondere auf eine Herstellungsfläche oder Materialschicht, eine erfindungsgemäße Bestrahlungsgeometrie bzw. Bestrahlungstrajektorie T an, gemäß der ein Teil der Schicht vorzugsweise selektiv bestrahlt wird. Die Trajektorie T ist maßgeschneidert, vordefiniert, vorzugsweise in sich geschlossen und beispielsweise schleifenartig, blumen- oder blütenförmig ausgestaltet oder gewählt, wobei die Konturen der Blüten oder Blätter den eigentlichen Bestrahlungspfad darstellen. Vorzugsweise definiert die Trajektorie den Defektbereich DB oder begrenzt diesen, sodass der Defektbereich beispielsweise die gleiche Ausdehnung wie eine "Einhüllende" der gezeigten Trajektorie oder Blüte aufweist.

Es ist weiterhin zu erkennen, dass die Trajektorie T Teilschleifen TS1, TS2 und Bögen BO aufweist. Vorzugsweise kann eine Teilschleife zwei oder mehr gegenüberliegende Bögen BU aufweisen. Bei genau zwei gegenüberliegenden Bögen BO einer Teilschleife TS1, TS2 erscheint diese Teilschleife - wie in Figur 5 dargestellt - beispielsweise ähnlich einer "acht" oder eines längsgeschnittenen 2p-Atomorbitals.

Einzelne Bögen BO der Trajektorie T sind vorzugsweise tropfen- bzw. kegelförmig geformt und im Ergebnis derart aneinandergefügt, dass sie einzelne Kreissegmente der Trajektorie belegen.

Die Bögen BO und/oder die Teilschleifen TS1, TS2 sind in dieser Ausgestaltung weiterhin beispielhaft gleichartig und gleich groß geformt.

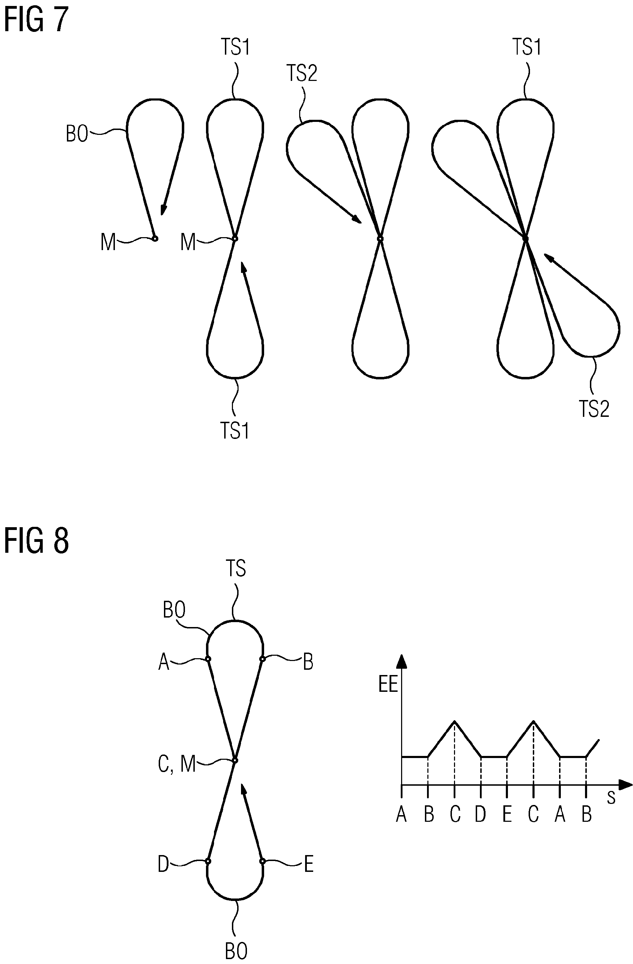

Im Wege des beschriebenen Bestrahlungsverfahrens zum Ausheilen von Strukturdefekten 11, wird - innerhalb einer Teilschleife TS1, TS2 - vorzugsweise zunächst ein Bogen und anschließend ein genau gegenüberliegender Bogen, innerhalb der Trajektorie T gescannt, abgefahren oder gerastert (vergleiche auch Figur 7 weiter unten).

Weiterhin wird vorzugsweise zunächst eine Teilschleife TS1 und anschließend oder sukzessive in Umfangsrichtung, d.h. im Uhrzeigersinn oder, wie in Figur 5 dargestellt im Gegenuhrzeigersinn, eine zweite Teilschleife TS2 bestrahlt.

Die Trajektorie T hat weiterhin einen Mittelpunkt, welcher in der Darstellung der Figur 5 ein Zentrum des Defektbereichs DB definiert.

Die Trajektorie T gemäß der Figur 5 ist weiterhin radialsymmetrisch ausgebildet oder geformt.

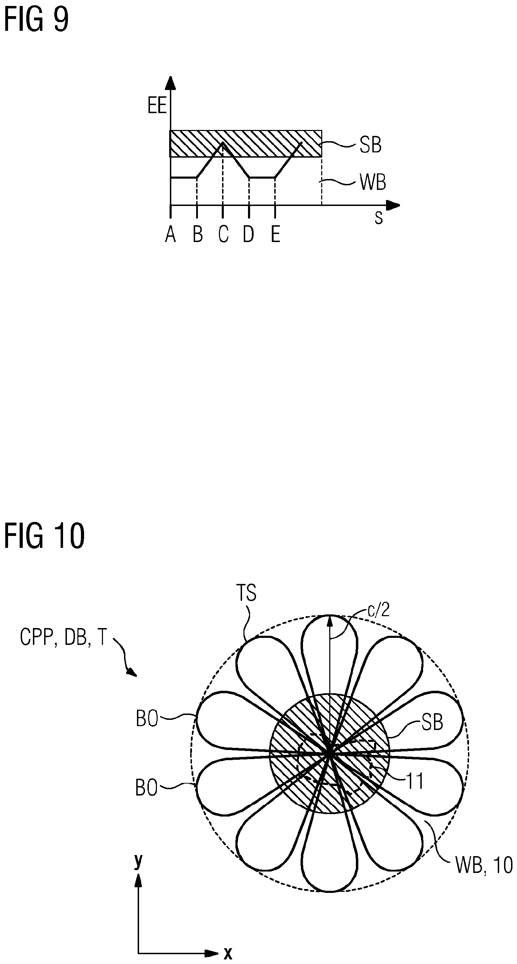

Wenn der Defektbereich DB einer additiv aufgebauten (physischen) Schicht 13, welcher wie beschrieben gewählt ist und den Strukturdefekt 11 enthält, mittels des Laser- und/oder Elektronenstrahls sukzessive bestrahlt wird, d.h. in gegenüberliegenden Schleifen und entlang eines Umfangs des Defektbereichs DB, führt ein entsprechender Energieeintrag EE (vergleiche beispielsweise Figur 9 weiter unten) je nach Bestrahlungsgeschwindigkeit dazu, dass im zeitlichen Mittel ein Kernbereich oder Mittelpunktbereich (vergleiche Bezugszeichen SB in Figur 10) des Defektbereichs DB beziehungsweise der Trajektorie T mit mehr Wärme oder Energie beaufschlagt wird, als beispielsweise ein Rand oder peripherer Bereich der Trajektorie T (vergleiche Bezugszeichen WB in Figur 10). Diese Situation, welche anhand der gradierten Füllung des Defektbereichs DB in Figur 5 gekennzeichnet ist, ist technisch vorteilhaft, da auch eine graduelle Variation der eingebrachten Energie in die Struktur 10 anhand einer geschlossenen Schleife ermöglicht wird. Dies führt vorteilhafterweise einerseits dazu, dass das Risiko, Sekundärdefekte oder Risse zu generieren gering ist. Andererseits kann entsprechend der Geometrie der vorbestimmten und vorzugsweise geschlossenen Trajektorie T der Energieeintrag, beispielsweise entsprechend dem detektieren Defekt maßgeschneidert werden (siehe unten).

Die erfindungsgemäße Bestrahlungstrajektorie bzw. -strategie und entsprechende Prozessführung während der additiven Herstellung bzw. zwischen dem Aufbau einzelner Schichten reduzieren vorteilhafterweise mechanische Spannungen und/oder auch entstehende Temperaturgradienten zwischen erneut aufgeschmolzenen Zonen und bereits verfestigtem Material der Struktur 10.

Figur 6 zeigt zusätzlich zur Figur 5 explizit den Strukturdefekt 11. Der Strukturdefekt 11 ist in der schematischen Darstellung der Figur 6 in oder umfassend den Mittelpunkt M des Defektbereichs angeordnet gekennzeichnet. Diese Ausführung erlaubt bevorzugt, wie zuvor beschrieben, eine einfache Implementierung oder Steuerung der Bestrahlung und gleichzeitig die Gradierung des Energieeintrags. Obwohl der Strukturdefekt 11, beispielsweise ein Riss, ein Anbindungsfehler eine Fehlstelle, ein "Stapelfehler" oder beispielsweise jede andere strukturelle Abweichung beispielsweise von einer idealen und/oder erwarteten kristallinen Ordnung der Struktur 10 im Realfall (wie auch dargestellt) nicht exakt radialsymmetrisch ist, kann eine radialsymmetrische Trajektorie T zweckmäßig und vorteilhaft sein, insbesondere dann, wenn eine Abmessung des Defektbereichs c größer, beispielsweise doppelt so groß, wie eine Abmessung d des Defekts 11 ist.

Es ist in Figur 6 weiterhin gekennzeichnet, dass ein Bogenradius einzelner Bögen oder Teilschleifen mit r, ein Durchmesser oder eine Abmessung des Defektbereichs bzw. einer Teilschleife mit c, ein maximaler Abstand benachbarter Teilschleifen oder Bögen mit a und eine maximale Abmessung oder ein Durchmesser des Defekts 11 mit d bezeichnet ist.

Demgemäß entspricht c vorzugsweise einem natürlichen Vielfachen (entspricht einer natürlichen Zahl größer 1) von d. Beispielsweise kann n gleich 2,3 oder 4 sein.

Der Abstand a benachbarter Teilschleifen oder Blütenelemente kann - beispielsweise abhängig von der Art des detektierten Defekts 11 als auch der individuell gewählten Trajektorie T - sowohl positive als auch negative Werte annehmen. Bei negativem Abstand a können einzelne Bögen BO bzw. Teilschleifen TS überlappen. Alternativ oder zusätzlich kann die Anzahl der Elemente, Teilschleifen TS oder Bögen BO derart definiert werden, dass sich ein bestimmter Abstand a ergibt. Der Radius r kann weiterhin von einem Benutzer des Verfahrens oder Techniker einer entsprechenden additiven Herstellungsanlage, beispielsweise über eine Benutzerschnittstelle (nicht explizit gekennzeichnet) gewählt werden.

Figur 7 deutet übersichtlich von links nach rechts den sukzessiven Fortschritt einer beispielhaften Bestrahlungstrajektorie T an (vergleiche ebenfalls Figur 5). Links im Bild ist die Bestrahlung einer Schicht (vergleiche Bezugszeichen 13) gemäß einem einzigen kegelförmigen Bogen BO ausgehend von dem Mittelpunkt M des entsprechenden Defektbereichs DB gekennzeichnet. In der nächsten Situation (weiter rechts) ist gezeigt, dass der erste (obere) Bogen BO weiterhin durch den Mittelpunkt M zurückgeführt wird und verläuft und anschließend ein gegenüberliegender zweiter Bogen einer ersten Teilschleife TS1 gebildet wird, um daraufhin wieder durch den Mittelpunkt M zu verlaufen.

Anschließend beginnt entsprechend dem Verlauf der Trajektorie T und sukzessive entgegen dem Uhrzeigersinn eine zweite Teilschleife TS2. Diese Teilschleife TS2 wird in dem Teil der Abbildung ganz rechts in Figur 7 analog zur Teilschleife TS1 vervollständigt.

Gemäß dieser Ausgestaltung und gemäß der übrigen gezeigten Ausgestaltungen kann der Energieeintrag (vergleiche weiterhin Figur 8) variiert werden, indem beispielsweise eine Strahlleistung im Zentrum des Defektbereichs DB oder mittelpunktsnah (vergleiche Bezugszeichen SB in Figur 10) erhöht und am Rand (vergleiche Bezugszeichen WB in Figur 10) reduziert wird. Alternativ oder zusätzlich kann die Bestrahlungsgeschwindigkeit in dem Randbereich beispielsweise erhöht und im Zentrum reduziert werden, um bei konstanter Laserleistung den Energieeintrag anzupassen.

Figur 8 deutet beispielhaft und schematisch weitere Aspekte des erfindungsgemäßen Bestrahlungs- oder Reparaturverfahrens für Strukturdefekte anhand einer einzelnen Teilschleife TS, umfassend zwei gegenüberliegende Bögen BO, an. Diese Teilschleife TS wird sukzessive in die geometrischen Abschnitte A, B, C, D und E unterteilt, bevor diese Teilschleife fertig bestrahlt ist. Im rechten Teil der Darstellung ist analog dazu ein möglicher eingebrachter Energieeintrag qualitativ über der zurückgelegten Wegstrecke s aufgetragen. Darin ist zu erkennen, dass im Mittelpunkt M bzw. C der Energieeintrag EE, welchen die Schicht erfährt, am größten ist. Dahingegen ist der Energieeintrag EE in den Bereichen A-B, und D-E am niedrigsten, welche die Randbereiche der Trajektorie bezeichnen. Durch diese Ausgestaltung ergeben sich die oben beschriebenen Vorteile. Weiterhin ist zu erkennen, dass der Energieeintrag EE in den Bereichen B-C und E-C bzw. C-D und C-A (wie oben beschrieben) graduell verläuft, und zwar jeweils zunehmend und abnehmend.

Figur 9 deutet weitere vorteilhafte Ausgestaltungen des beschriebenen Verfahrens an, insbesondere die Möglichkeit, die eingebrachte Energie so anzupassen, dass nur im Bereich des detektierten Defekts (Mittelpunktbereich oder Kern des Defektbereichs DB) das Material P für das Bauteil 10 tatsächlich umgeschmolzen wird. Weiter außen, beziehungsweise in einem Randbereich, wird das Material vorzugsweise lediglich erwärmt, was ebenfalls zu einer Ausheilung von Defekten und im Übrigen sogar zu einer Ausbildung von Phasenausscheidungen führen kann. Vorzugsweise wird das Material in diesem Bereich aber nicht auf- bzw. umgeschmolzen; mit anderen Worten der Schmelzpunkt lokal nicht überschritten. Dies ist anhand des schematischen Diagramms der Figur 9 gekennzeichnet. Im Bereich der Energiespitzen um den Punkt C beziehungsweise den Mittelpunkt herum wird also durch die Bestrahlung mittels des Energiestrahls 20 ein Schmelzbad selektiv ausgebildet (vergleiche schraffierter Bereich im Diagramm), wohingegen beispielsweise in den Randbereichen lediglich ein erwärmter Bereich WB entsteht.

Figur 10 verdeutlicht diesen Zusammenhang weiterhin in einer schematischen Aufsicht auf den Defektbereich DB. Der schraffierte Kernbereich des Bereichs DB, welcher den Defekt 11 vorzugsweise vollständig enthält, definiert vorzugsweise den Bereich eines Schmelzbades SB. Wenn der Defekt 11 beispielsweise also demgemäß vollständig umgeschmolzen wird, kann der Defekt 11 auch zweckmäßig ausgeheilt werden und beispielsweise weitere Defektbildung verhindert werden.

Der Bereich des Schmelzbades SB bezeichnet vorzugsweise einen radial inneren Teil des Defektbereichs DB, wohingegen der erwärmte Bereich WB einen radial äußeren, an den Bereich des Schmelzbades SB angrenzenden Bereich definiert. Der Radius (nicht explizit eingezeichnet) des Bereichs des Schmelzbades SB kann beispielsweise ein bis zwei Drittel eines Radius' (vgl. c/2) des Defektbereichs DB betragen.

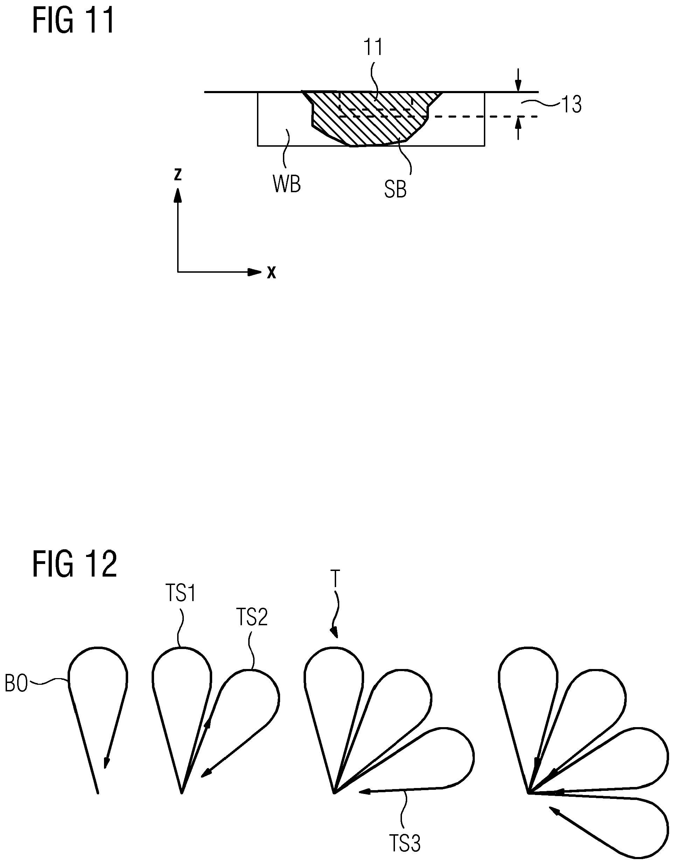

Figur 11 deutet in einer schematischen Schnittansicht Aspekte der Bestrahlung gemäß den Bestrahlungstrajektorien aus Figur 10 an. Es ist das Profil des Schmelzbades SB zu erkennen, welches in der Schnittansicht ebenfalls den Strukturdefekt 11 enthält bzw. diesen vorteilhafterweise umschließt. Weiterhin ist eine Schicht bzw. Schichtdicke 13 eingezeichnet, welche beispielhaft in z-Richtung (Aufbaurichtung) weiter ausgedehnt ist als der Defekt 11, jedoch weniger als das Schmelzbad SB. Durch diese Ausgestaltung kann das Schmelzbad SB vorteilhafterweise auch vollständig den Defekt 11 erreichen und zweckmäßig ausheilen.

Figur 12 zeigt von rechts nach links den sukzessiven Fortschritt einer zu der Ausgestaltung der Figur 7 alternativen Bestrahlungstrajektorie T. Links im Bild wird ein Bogen BO ähnlich zu der Darstellung der Figur 7 ab gerastert. Weiter rechts ist dargestellt, dass nach dem Bogen BO, welcher für eine erste Teilschleife TS 1 vorgesehen ist und diese darstellt, ein zweiter Bogen für oder darstellend eine zweite Teilschleife TS2 bestrahlt wird. Im Uhrzeigersinn darauffolgend ist weiter rechts gekennzeichnet, dass ein weiterer Bogen für oder darstellend eine dritte Teilschleife TS 3 bestrahlt wird; ganz rechts wiederum ein weiterer (nicht explizit gekennzeichneter) Bogen einer weiteren Teilschleife bzw. eines weiteren Bogens.

Häufig tritt automatisch im Umkehrpunkt der Bögen, Schleifen oder der Trajektorie ein erhöhter Wärmeeintrag (Überhitzung) dadurch auf, dass eine Strahlführungsoptik, beispielsweise umfassend Umlenkspiegel, der entsprechenden Herstellungsanlage inhärent mit einer gewissen Trägheit arbeitet. Dadurch wird die Möglichkeit gegeben, mit konstanter Bestrahlungs- oder Strahlleistung, beispielsweise Soll-Laserleistung, und einer konstanten Soll-Bestrahlungsgeschwindigkeit zu bestrahlen, d.h. die Trajektorie abzufahren, wobei ebenfalls die erfinderischen Vorteile genutzt werden können, ohne die genannten Strahlparameter zu variieren, beispielsweise die Bestrahlungsleistung zu erhöhen.

Auch auf diese Art wird also das zugrunde liegende Problem gelöst und ein im Vergleich zu den oben beschriebenen Ausführungsformen im Zentrum erhöhter Energieeintrag und damit erhöhter Grad der Umschmelzung (zeitlich oder räumlich) erreicht. Mit anderen Worten wird die Möglichkeit gegeben, einen Energieeintrag über die Wahl der entsprechenden Trajektorie, Teilschleifen oder Bögen allein zu variieren. Alternativ oder zusätzlich kann der Energieeintrag, insbesondere zur Vermeidung von destruktiven Temperaturgradienten während des schichtweisen Aufbaus der Struktur 10 zusätzlich auch über Strahlparameter erfolgen.

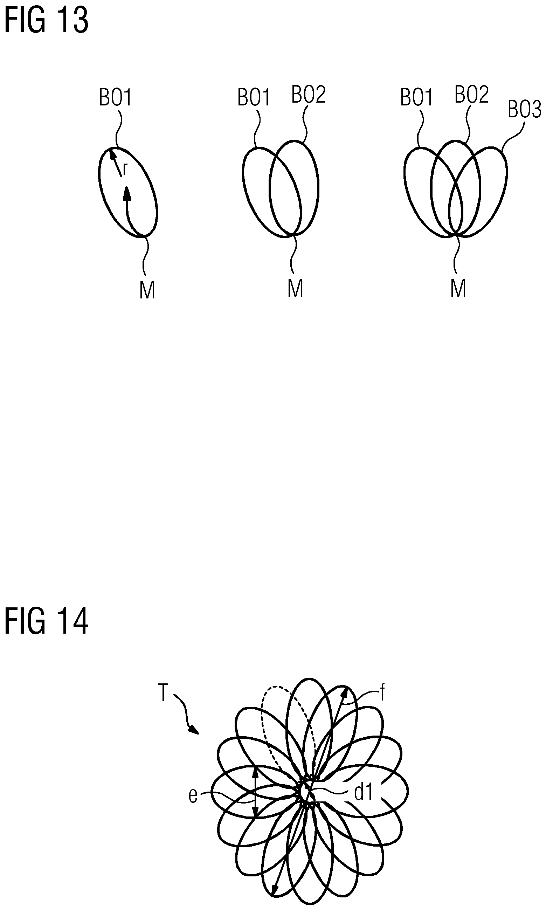

Figur 13 zeigt im Gegensatz zu den vorherigen Ausgestaltungen der Trajektorie T eine elliptische Form der Teilschleifen oder Bögen BO1, BO2, und BO3. Weiterhin überlappen die einzelnen Bögen und schneiden sich in einem Schnittpunkt (nicht explizit gekennzeichnet) sowie möglicherweise im Mittelpunkt des Defektbereichs DB.

Bei den elliptischen Teilschleifen, Elementen oder Bögen kann neben dem Gesamtdurchmesser (vergleiche c/2 oben), ein Radius r, der Überlapp oder Abstand a als auch eine Breite (nicht explizit gekennzeichnet) der Bögen von einem Benutzer beispielsweise über eine Benutzerschnittstelle an eine Steuerung (vergleiche Bezugszeichen CPP weiter unten) übergeben oder editiert werden.

Obwohl dies in den Figuren nicht explizit dargestellt ist, können einzelne Teilschleifen gemäß dieser Ausgestaltung auch mit gegenüberliegenden Bögen bestrahlt werden, beispielsweise analog zu der in Figur 7 beschriebenen Ausführungsform.

Die Trajektorie T kann insgesamt beispielsweise auch wie in Figur 14 dargestellt, ausgebildet werden, wobei die eingezeichneten Abstände e und f sowie d1 weitere Parameter oder Kenngrößen für die ausgewählte Bestrahlungstrajektorie darstellen. Ein Benutzer oder Anwender des beschriebenen Verfahrens bzw. der entsprechenden additiven Herstellungsanlage kann beispielsweise über diese Parameter definieren, welche Werte konstant gehalten werden sollen. Zum Beispiel könnten der Radius r und der Abstand a der Elemente konstant bleiben, während sich der Abstand zum Zentrum verringert.

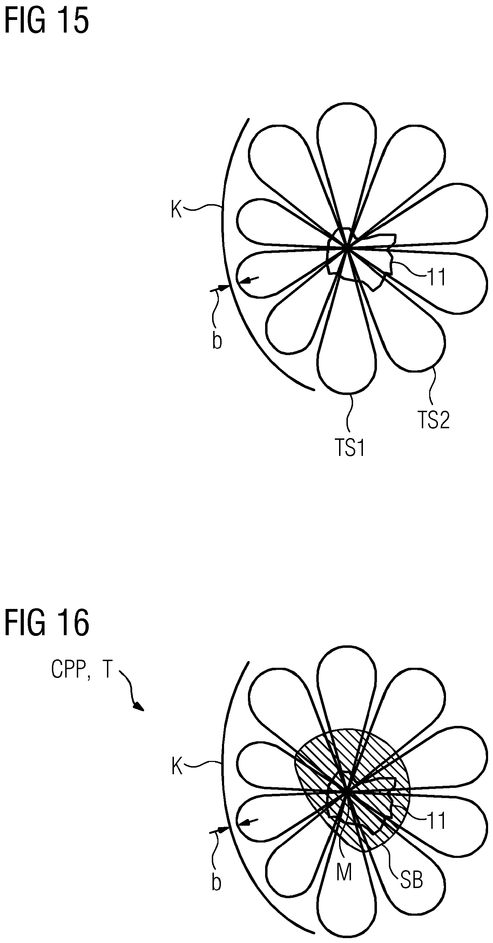

Figur 15 zeigt eine Situation, wobei eine entsprechende Schicht an einer Struktur- oder Bauteilkante K zum Zwecke der Defektheilung bestrahlt wird. An der genannten Kante K ist die Trajektorie T bzw. Bestrahlungsgeometrie vorzugsweise verzerrt oder weicht von einer radialen Symmetrie ab wie in Figur 15 dargestellt. Der eingezeichnete Abstand zur Bauteilkante b kann beispielsweise definiert sein und sollte vorzugsweise größer null und kleiner 1 mm sein, beispielsweise zwischen, 1 und 0,5 mm, insbesondere 0,2 mm betragen.

Auch die Strahlleistung oder Laserleistung kann gemäß dieser Ausgestaltung beispielsweise durch einen Computer oder durch den Benutzer (über eine Benutzerschnittstelle mit dem Computer) automatisch so angepasst werden, dass der umgeschmolzene Bereich nicht mehr symmetrisch ist. Allerdings muss dann der gesamte Defekt mit einem definierten oder vorbestimmten Abstand abgedeckt werden, wobei ausreichend Energie zum Umschmelzen bereitgestellt werden muss. Mit anderen Worten muss der Defektbereich weiterhin dementsprechend dimensioniert werden.

Eine solche Situation ist in Figur 16 dargestellt, welche ein Schmelzbad SB zeigt (vergleiche Schraffur), welches den gesamten Defekt 11 innerhalb des Defektbereichs DB umschließt. Es kann ebenfalls vorgesehen sein, einen Strukturdefekt an einer Bauteilecke (nicht explizit gekennzeichnet) gemäß dem beschriebenen Verfahren zu bestrahlen, wobei die Trajektorie T entsprechend an mehreren Seiten verzerrt sein kann.

Weiterhin wird ein Computerprogrammprodukt bzw. ein Computerprogramm angegeben, welches beispielsweise in eine Steuerungssoftware für die additiven fertigungsvorbereitenden Prozesse, beispielsweise CAM-Verfahren, implementiert sein kann oder umfassen kann. Demgemäß sind die vorgestellten Trajektorien T ebenfalls mit dem Bezugszeichen CPP für Computerprogrammprodukt indiziert, da die eigentliche Bestrahlung erst durch das Computerprogramm bzw. Computerprogrammprodukt als Resultat des Computerprogramms ermöglicht wird. Möglicherweise ist eine Berücksichtigung aller notwendigen geometrischen Parameter, Bestrahlungsparameter, als auch Strahlparameter auf manuellem Wege nicht möglich, sodass die beschriebene Erfindung alternativ oder vorzugsweise durch das Computerprogrammprodukt CPP definiert werden kann.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Bestrahlungsverfahren für die pulverbettbasierte, additive Herstellung eines Bauteils (10) zum Heilen von Strukturdefekten (11, 12) in einer additiv aufgebauten Struktur für das Bauteil (10), umfassend die folgenden Schritte:
- Bereitstellen eines Laser- oder Elektronenstrahls (20),
- selektives Bestrahlen eines Defektbereichs (DB) einer additiv aufgebauten Schicht (13) der Struktur mit dem Laser- oder Elektronenstrahl (20) gemäß einer vorbestimmten, insbesondere geschlossenen, Trajektorie (T), welche den Defektbereich (DB) definiert, wobei die Trajektorie eine schleifenartige Trajektorie ist, wobei der Defektbereich (DB) einen Strukturdefekt (11, 12) enthält und wobei der Defektbereich (DB) eine Mehrzahl von Teilschleifen (TS, TS1, TS2, TS3) umfasst und jede Teilschleife (TS, TS1, TS2, TS3), insbesondere zwei gegenüberliegende, Bögen (BO, BO1, BO2, BO3) aufweist.

2. Verfahren gemäß Anspruch 1, wobei der Defektbereich (DB) derart gewählt wird, dass der Strukturdefekt (11) in einem Mittelpunkt (M) des Defektbereichs (DB) liegt.

3. Verfahren gemäß Anspruch 1 oder 2, wobei einzelne Teilschleifen (TS, TS1, TS2, TS3) bzw. Bögen (BO, BO1, BO2, BO3) nacheinander in Umfangsrichtung des Defektbereichs (DB) bestrahlt werden.

4. Verfahren gemäß einem der vorhergehenden Ansprüche, wobei sich benachbarte Teilschleifen (TS, TS1, TS2, TS3) bzw. Bögen (BO, BO1, BO2, BO3) zumindest teilweise überlappen.

5. Verfahren gemäß einem der vorhergehenden Ansprüche, wobei sich benachbarte Teilschleifen (TS, TS1, TS2, TS3) bzw. Bögen (BO, BO1, BO2, BO3) nicht überlappen.

6. Verfahren gemäß einem der vorhergehenden Ansprüche, wobei die Teilschleifen (TS, TS1, TS2, TS3) bzw. Bögen (BO, BO1, BO2, BO3) tropfenförmig oder elliptisch sind.

7. Verfahren gemäß einem der vorhergehenden Ansprüche, wobei jeder Bogen von einem Mittelpunkt (M) des Defektbereichs (DB) ausgeht und - zur Bildung der Teilschleife bzw. eines weiteren Bogens - am Ende wieder durch den Mittelpunkt (M) verläuft.

8. Verfahren gemäß einem der vorhergehenden Ansprüche, wobei der Defektbereich (DB), umfassend eine Mehrzahl von Teilschleifen (TS, TS1, TS2, TS3), radialsymmetrisch ist.

9. Verfahren gemäß einem der vorhergehenden Ansprüche, wobei ein Strahlparameter, beispielsweise eine Strahlleistung oder Bestrahlungsgeschwindigkeit, während der Bestrahlung des Defektbereichs (DB) variiert wird.

10. Verfahren gemäß einem der vorhergehenden Ansprüche, wobei eine Strahlleistung pro Teilschleife (TS, TS1, TS2, TS3) bzw. Bogen (BO, BO1, BO2, BO3) in einem Kernbereich (SB) im Vergleich zu einem Rand (WB) des Defektbereichs (DB) erhöht wird.

11. Verfahren gemäß einem der vorhergehenden Ansprüche, wobei Strahlparameter für die Bestrahlung derart gewählt werden, dass ein Basismaterial (P) für das Bauteil (10) ausschließlich in einem Kernbereich (SB) umgeschmolzen wird und an einem Rand (WB) lediglich erwärmt wird.

12. Verfahren zum pulverbettbasierten, additiven Herstellen eines Bauteils (10), wobei einzelne Schichten (13) des Bauteils (10) zum Heilen von Strukturdefekten (11) gemäß dem Verfahren nach einem der vorhergehenden Ansprüche bestrahlt werden.

## Claims

1. Irradiating method for the powder-bed-based, additive manufacturing of a component (10) in order to heal structural defects (11, 12) in an additively constructed structure for the component (10), comprising the following steps:
- providing a laser or electron beam (20),
- selectively irradiating a defect region (DB) of an additively structured layer (13) of the structure with the laser or electron beam (20) in accordance with a predetermined, in particular closed, trajectory (T), which defines the defect region (DB), wherein the trajectory is a looplike trajectory, wherein the defect region (DB) contains a structural defect (11, 12) and wherein the defect region (DB) comprises a plurality of partial loops (TS, TS1, TS2, TS3) and each partial loop (TS, TS1, TS2, TS3) has, in particular two opposite, arcs (BO, BO1, BO2, BO3).

2. Method according to Claim 1, wherein the defect region (DB) is chosen in such a way that the structural defect (11) lies at a center point (M) of the defect region (DB).

3. Method according to Claim 1 or 2, wherein individual partial loops (TS, TS1, TS2, TS3) or arcs (BO, BO1, BO2, BO3) are irradiated successively in the peripheral direction of the defect region (DB).

4. Method according to one of the preceding claims, wherein adjacent partial loops (TS, TS1, TS2, TS3) or arcs (BO, BO1, BO2, BO3) at least partly overlap.

5. Method according to one of the preceding claims, wherein adjacent partial loops (TS, TS1, TS2, TS3) or arcs (BO, BO1, BO2, BO3) do not overlap.

6. Method according to one of the preceding claims, wherein the partial loops (TS, TS1, TS2, TS3) or arcs (BO, BO1, BO2, BO3) are drop-shaped or elliptic.

7. Method according to one of the preceding claims, wherein every arc proceeds from a center point (M) of the defect region (DB) and - in order to form the partial loop or a further arc - runs through the center point (M) again at the end.

8. Method according to one of the preceding claims, wherein the defect region (DB), comprising a plurality of partial loops (TS, TS1, TS2, TS3), is radially symmetrical.

9. Method according to one of the preceding claims, wherein a beam parameter, for example a beam power or irradiation speed, is varied during the irradiation of the defect region (DB) .

10. Method according to one of the preceding claims, wherein a beam power per partial loop (TS, TS1, TS2, TS3) or arc (BO, BO1, BO2, BO3) is increased in a core region (SB) in comparison with an edge (WB) of the defect region (DB).

11. Method according to one of the preceding claims, wherein beam parameters for the irradiation are chosen in such a way that a base material (P) for the component (10) is remelted exclusively in a core region (SB) and is only heated at an edge (WB).

12. Method for the powder-bed-based, additive manufacturing of a component (10), wherein in order to heal structural defects (11) individual layers (13) of the component (10) are irradiated in accordance with the method according to one of the preceding claims.

## Revendications

1. Procédé d'exposition à du rayonnement pour la fabrication additive reposant sur le lit de poudre d'une pièce (10) pour remédier à des défauts (11, 12) de structure dans une structure, fabriquée de manière additive, de la pièce (10), comprenant les stades suivants :
- on se procure un faisceau (20) laser ou un faisceau d'électrons,
- on expose sélectivement à du rayonnement, une partie (DB) défectueuse d'une couche (13) fabriquée de manière additive, de la structure par le faisceau (20) laser ou par le faisceau d'électrons suivant une trajectoire (T) définie à l'avance, notamment fermée, qui définit la partie (DB) défectueuse, dans lequel la trajectoire est de type en boucle, dans lequel la partie (DB) défectueuse contient un défaut (11, 12) de structure, et dans lequel la partie (DB) défectueuse comprend une pluralité de boucles (TS, TS1, TS2, TS3) partielles et chaque boucle (TS, TS1, TS2, TS3) partielle a notamment deux arcs (BO, BO1, BO2, BO3) opposés.

2. Procédé suivant la revendication 1, dans lequel on choisit la partie (DB) défectueuse, de manière à ce que le défaut (11) de structure se trouve dans un point (M) médian de la partie (DB) défectueuse.

3. Procédé suivant la revendication 1 ou 2, dans lequel on expose à du rayonnement divers boucles (TS, TS1, TS2, TS3) partielles ou arcs (BO, BO1, BO2, BO3), les uns après les autres, dans la direction périphérique de la partie (DB) défectueuse.

4. Procédé suivant l'une des revendications précédentes, dans lequel des boucles (TS, TS1, TS2, TS3) partielles ou des arcs (BO, BO1, BO2, BO3) voisins se chevauchent au moins en partie.

5. Procédé suivant l'une des revendications précédentes, des boucles (TS, TS1, TS2, TS3) partielles ou des arcs (BO, BO1, BO2, BO3) voisins ne se chevauchent pas.

6. Procédé suivant l'une des revendications précédentes, dans lequel des boucles (TS, TS1, TS2, TS3) partielles ou des arcs (BO, BO1, BO2, BO3) sont en forme de goutte ou sont elliptiques.

7. Procédé suivant l'une des revendications précédentes, dans lequel chaque arc s'étend à partir d'un point (M) médian de la partie (DB) défectueuse et - pour la formation de la boucle partielle ou d'un autre arc-repasse à une extrémité par le point (M) médian.

8. Procédé suivant l'une des revendications précédentes, dans lequel la partie (DB) défectueuse comprenant une pluralité de boucles (TS, TS1, TS2, TS3) partielles est à symétrie radiale.

9. Procédé suivant l'une des revendications précédentes, dans lequel on fait varier un paramètre de rayonnement, par exemple une puissance de rayonnement ou une vitesse de rayonnement, pendant l'exposition à du rayonnement de la partie (DB) défectueuse.

10. Procédé suivant l'une des revendications précédentes, dans lequel on augmente une puissance de rayonnement par boucle (TS, TS1, TS2, TS3) partielle ou arc (BO, BO1, BO2, BO3) dans une partie (SB) de coeur par rapport à un bord (WB) de la partie (DB) défectueuse.

11. Procédé suivant l'une des revendications précédentes, dans lequel on choisit des paramètres de rayonnement pour l'exposition à du rayonnement, de manière à fondre un matériau (P) de base de la pièce (10) exclusivement dans une partie (SB) de coeur et à chauffer simplement sur un bord (WB).

12. Procédé de fabrication additive, à base du lit de poudre, d'une pièce (10), dans lequel on expose à du rayonnement diverses couches (13) de la pièce (10) pour remédier à des défauts (11) de structure suivant le procédé selon l'une des revendications précédentes.
